Europäisches Patentamt

European Patent Office

Office européen des brevets

(11) Numéro de publication : **0 080 933**
**B1**

(12) **FASCICULE DE BREVET EUROPÉEN**

(19)

(45) Date de publication du fascicule du brevet :
05.06.85

(21) Numéro de dépôt : **82402135.6**

(22) Date de dépôt : **23.11.82**

(51) Int. Cl.⁴ : **A 23 C 19/028, A 23 J 1/20**

(54) Procédé de récupération des protéines du lactosérum, application à la production des fromages et fromages obtenus.

(30) Priorité : **24.11.81 AU 1682/81**

(43) Date de publication de la demande :
**08.06.83 Bulletin 83/23**

(45) Mention de la délivrance du brevet :
**05.06.85 Bulletin 85/23**

(84) Etats contractants désignés :
**AT BE CH DE FR GB IT LI LU NL SE**

(56) Documents cités :
**FR-A- 2 222 019**
**FR-A- 2 263 701**
**FR-A- 2 340 052**

(73) Titulaire : **INSTITUT NATIONAL DE LA RECHERCHE AGRONOMIQUE (INRA)**
**149, rue de Grenelle**
**F-75341 Paris Cedex 07 (FR)**

(72) Inventeur : **Czulak, Joseph**
**Flat 5, 25 Alexandra Avenue**
**South Yarra Vic. 3141 (AU)**

(74) Mandataire : **Phélip, Bruno et al**
**c/o Cabinet Harlé & Phélip 21, rue de la Rochefoucauld**
**F-75009 Paris (FR)**

Jouve, 18, rue St-Denis, 75001 Paris, France

EP 0 080 933 B1

# 0 080 933

**Description**

La présente invention concerne le domaine de l'industrie laitière et a plus particulièrement pour objet un procédé pour la récupération des protéines du lactosérum (petit-lait) et leur utilisation dans la fabrication de fromages. L'invention est également relative à de nouveaux produits de type fromages pouvant être obtenus par un tel procédé.

Les produits fromagers naturels, par exemple de type cheddar, caillé malaxé, colby, gouda ou suisse, sont fabriqués par coagulation de lait, affinés à l'aide de bactéries convenables productrices d'acide lactique, jusqu'à l'acidité désirée, au moyen d'enzymes de caillage de lait appropriées, découpage du coagulum et éventuellement cuisson du caillé résultant dans son lactosérum. On sépare par égouttage le lactosérum du caillé, après quoi on peut transformer en cheddar ou brasser le caillé alors que de l'acide supplémentaire apparaît du fait de la transformation par fermentation dans le caillé du lactose en acide lactique. On peut soumettre ou non le caillé à un lavage à l'eau. S'il s'agit de fabriquer du fromage du type cheddar, le caillé est broyé, salé et mis par pressage sous forme d'éléments ronds, parallélépipédiques ou analogues aux fins d'affinage. Les opérations d'addition de bactéries productrices d'acide lactique, d'affinage du lait, de découpage du caillé, de cuisson du caillé, de brassage du caillé, de transformation du caillé en cheddar et de salage du caillé sont toutes réglées en vue de l'obtention d'un produit dans lequel le lactose résiduel et le pouvoir tampon disponible du caillé sont équilibrés de façon que la transformation totale par fermentation du lactose résiduel du caillé en acide lactique donne un fromage doté du pH minimum répondant aux exigences particulières du marché, usuellement compris entre 4,9 et 5,5.

Les procédés classiques de fabrication de fromages naturels et élaborés ne font essentiellement usage que de caséine. La plupart des protéines du lactosérum ne sont incorporées au fromage qu'à raison de quelques unités pour cent, les autres demeurant dissoutes dans le lactosérum et étant évacuées en tant que sous-produit du procédé. Or, les protéines du lactosérum représentent environ 14 à 24 % en poids de l'ensemble des protéines du lait entier ou écrémé et leur valeur alimentaire est au moins comparable à celle de la caséine. En conséquence, la perte des protéines du lactosérum subie suivant les procédés de fabrication de fromage traditionnels limite les rendements possibles de ces procédés. L'utilisation même partielle des protéines du lactosérum dans la fabrication de fromages naturels et élaborés est d'un grand intérêt sur le plan industriel.

On a donc déjà tenté dans le passé de concevoir un procédé qui permettrait de tirer pleinement parti des protéines du lactosérum en fromagerie.

Une solution possible consiste à récupérer ces protéines à partir du lactosérum, par séchage, condensation, ultrafiltration ou osmose inverse du lactosérum. On recombine ensuite au fromage les protéines de lactosérum récupérées. De tels procédés sont décrits par exemple par F.V. Kosikowski, Cheese and Fermented Foods, Edwards Brothers, Inc., Ann Arbor, Michigan, 2e éd. 1977, pp. 451-458. Selon le procédé décrit dans le brevet FR-A-2 340 052, on peut ajouter au lait des protéines sériques dénaturées avant de procéder à l'ultrafiltration du lait ; la dénaturation, insolubilisation ou floculation de ces protéines pouvant être obtenues par chauffage avec ou sans acidification.

Cette solution soulève une difficulté du fait que les constituants du lactosérum récupérés sont dépourvus des caractéristiques physiques et chimiques requises pour la fabrication du fromage naturel.

Par exemple, on peut introduire dans le caillé, les protéines du lactosérum séchées, mais seule une quantité limitée de protéines de lactosérum peut être ajoutée de cette manière au caillé de fromage sans modifier les propriétés qu'on désire. En général, l'addition au caillé de protéines du lactosérum peut conférer au produit final une texture granuleuse et un goût amer et, par conséquent, les protéines de lactosérum récupérées à partir de lactosérum ne sont pas utilisées à un degré notable dans les procédés industriels de fabrication de fromage naturel.

Pour les mêmes raisons, les protéines de lactosérum récupérées de cette manière ne sont pas utilisées à un degré notable dans la fabrication industrielle de fromages élaborés. En outre, il n'est industriellement possible d'ajouter que des quantités limitées de telles protéines de lactosérum récupérées à des produits à tartiner, aliments ou autres produits à base de fromages élaborés, ou à des imitations de fromages.

Le brevet FR-A 2 263 701 décrit un procédé qui consiste à concentrer par ultrafiltration un produit laitier liquide (p. ex. petit lait), puis à ajouter au concentrat de l'eau ou un autre produit laitier liquide de concentration plus faible que le produit initialement soumis à ultrafiltration, et à concentrer à nouveau par ultrafiltration. Le concentrat ainsi obtenu peut être mélangé à un produit laitier solide préparé par atomisation avec ou sans ultrafiltration préalable à un produit laitier n'ayant pas subi de concentration préalable, ce qui conduit à un produit de concentration intermédiaire.

De toute façon, dans tous ces procédés connus, la quantité maximale de protéines de lactosérum qu'il est possible d'introduire dans le fromage ne peut dépasser celle du lait à partir duquel le lactosérum de départ a été obtenu. On sait que la proportion des protéines dites solubles (ou protéines de lactosérum) du lait de vache est de l'ordre de 20 % en poids par rapport aux protéines totales du lait. Cette valeur peut varier quelque peu selon la femelle laitière, la saison, la nourriture de la femelle et autres paramètres bien connus de l'homme du métier. Ainsi, il n'est pas possible d'introduire dans le fromage

2

0 080 933

final plus de 20 % en poids environ de protéines de lactosérum et, ainsi qu'il a été indiqué précédemment, cette quantité ne peut même pas être atteinte dans la pratique lorsque les protéines de lactosérum ont subi une dénaturation lors de leur séparation, en particulier sous l'effet des modifications de pH ou de l'élévation de température.

Pour conserver au fromage final des propriétés organoleptiques acceptables, il est en effet obligatoire de limiter la quantité de protéines de lactosérum introduites dans le lait (ou le caillé) destiné à la production des fromages.

Une autre solution pour utiliser les protéines de lactosérum en fromagerie consiste à les co-précipiter avec la caséine. Un tel procédé pour l'obtention de co-précipités de caséine et de protéines de lactosérum à partir du lait est décrit dans le brevet US-A- 3 535 304. Toutefois, les produits obtenus par ce procédé ne présentent pas les caractéristiques requises pour la fabrication de fromage.

D'autres procédés connus pour la production de co-précipités de caséine et de protéines de lactosérum aboutissent aussi à des produits qui, bien qu'intéressants pour certaines applications, ne sauraient servir de matière première pour la fabrication de fromages.

On a aussi proposé de fabriquer des produits convenant pour la conversion en fromage en modifiant, par ultrafiltration ou osmose inverse, la composition de lait entier ou écrémé. Le brevet AU-A-477 339 décrit un procédé suivant lequel on traite par ultrafiltration du lait entier ou écrémé jusqu'à le ramener au cinquième environ de son volume, pour obtenir un produit, parfois appelé « préfromage liquide » qu'on fait ensuite fermenter par des moyens traditionnels pour obtenir du fromage. Un tel produit convient bien pour la fabrication de fromages frais, à pâte molle de type camembert ou reblochon ou à pâte semi-dure. Il ne peut actuellement être utilisé industriellement pour fabriquer des fromages plus durs du type cheddar, ou colby ou du type à pâte brassée, en raison de sa teneur trop élevée en humidité et de la forte viscosité du préformage liquide.

Plus récemment, on a décrit un procédé permettant de régler à tout niveau souhaité la teneur en humidité et le pH du produit final, pour obtenir ainsi un produit ayant une teneur en humidité et un pH qui permettent de l'utiliser en tant que produit de remplacement de fromages naturels dans la fabrication de fromages élaborés. Selon ce procédé (voir « Cheese Base for Processing : A High Yield Product from Whole Milk by Ultrafiltration », C.A. Ernstrom, B.J. Sutherland et G.W. Jameson, Journal of Dairy Science, 63, 228, (1980), on concentre par ultrafiltration du lait entier à pH normal ou acidifié à pH 5,7 jusqu'à le ramener à 40 % de son poids initial, on le soumet à une diafiltration à volume constant jusqu'à établissement du rapport souhaité entre lactose et pouvoir tampon et on le concentre par ultrafiltration jusqu'à ramener son poids à 20 %. On inocule alors aux rétentats des ferments de fromage et on laisse incuber en vue de la fermentation totale du lactose résiduel.

Toutefois, ces derniers procédés s'écartent radicalement des techniques classiques de fabrication de fromages.

La présente invention a pour but de procurer un procédé qui permet de récupérer les protéines du lactosérum et de les incorporer à un produit du type fromage traditionnel, sans faire apparaître les inconvénients sus-indiqués, et qui peut être associé et mis en œuvre avec des installations et procédés de fabrication de fromage traditionnels.

La présente invention a également pour objet un procédé de production de fromages incorporant ledit procédé de récupération des protéines de lactosérum et procurant un rendement fortement amélioré par rapport aux procédés connus.

L'invention a pour autre objet des nouveaux produits consistant en des fromages contenant des protéines de lactosérum dans des proportions jamais atteintes jusqu'à présent tout en présentant de bonnes qualités organoleptiques.

La présente invention a pour objet un procédé de récupération de protéines de lactosérum, suivant lequel on soumet le lactosérum, séparé du caillé de fromage au cours de la fabrication normale, d'abord à une pasteurisation, puis à une ultrafiltration pour obtenir un concentré de protéines de lactosérum, on mélange le concentré avec du lait et on soumet le lait ainsi enrichi à une autre ultrafiltration après laquelle on le traite de la manière usuelle pour former un caillé.

Le lait ajouté au concentré de protéines de lactosérum peut être du lait entier ou écrémé ou un mélange de l'un et l'autre.

L'objectif, en mélangeant le lait avec le concentré de protéines de lactosérum, est d'obtenir assez de caséine pour que, lors de la coagulation à la présure ou toute autre enzyme de coagulation, il se forme un réseau de fibres qui emprisonne ou retient dans ses mailles les protéines de lactosérum concentrées.

On peut alors mélanger le caillé résultant avec du caillé de fromage ordinaire, provenant par exemple de tout procédé classique, et faire fermenter, ou le faire fermenter séparément pour obtenir un produit nouveau du type fromage. Dans tous les cas, on obtient un produit à teneur accrue en protéines de lactosérum. Le rendement d'ensemble du procédé est supérieur d'au moins 8 % environ, et jusqu'à 40 % à celui d'un procédé de fabrication de fromage classique, selon les proportions de concentré de lactosérum et du lait mises en œuvre.

Une pasteurisation est nécessaire avant la première étape d'ultrafiltration pour empêcher le développement d'acidité dans le lactosérum. De préférence, on opère la pasteurisation à une température d'au moins 74 °C pendant 15 secondes.

De préférence, il faut effectuer chacune des opérations d'ultrafiltration de façon à obtenir un rapport

**0 080 933**

de concentration allant de 5 à 6. Il est toutefois possible de mettre en œuvre le procédé selon l'invention avec des rapports de concentration ne dépassant pas 3,5.

La quantité de lait ajoutée gouverne la fermeté du caillé provenant du produit enrichi et dont le degré de récupération de protéines de lactosérum dans le produit final. Il est ainsi possible, en choisissant le rapport lait/concentré de protéines de lactosérum, d'ajuster les proportions de caséine et de protéines de lactosérum et donc la nature du produit du type fromage finalement obtenu. Il en découle la possibilité d'utiliser le procédé à la fabrication d'une large variété de produits du type fromage allant, par exemple, de fromages durs, convenant à un traitement, à des fromages à pâte molle pouvant être mis sur le marché en l'état. L'addition de caillé ordinaire au caillé enrichi ajoute encore à la variété de produits du type fromage que l'on peut obtenir.

De manière caractéristique, le volume de lait que l'on mélange avec le concentré de lactosérum après la première ultrafiltration doit représenter au moins deux fois, et de préférence 2 à 5 fois, le volume du concentré de lactosérum.

Après la seconde ultrafiltration, la manière de procéder usuelle consiste à ajouter de la présure et des ferments au mélange enrichi, à une température de 30-31 ºC, pour provoquer la coagulation de la caséine et établir des conditions convenables pour la fermentation ultérieure.

On peut alors découper le caillé coagulé en morceaux de grandeur appropriée pour le laisser s'égoutter, si besoin est.

Si l'on mélange le caillé enrichi avec du caillé ordinaire avant fermentation, le rapport enrichi/ordinaire est de préférence d'environ 1 : 4. Le caillé obtenu est très résistant, au point que des techniques de découpage spéciales peuvent être nécessaires.

Le fromage obtenu par le procédé a un caractère essentiellement naturel et ne présente pas la texture granuleuse ni l'amertume découlant normalement de l'addition de protéines de lactosérum précipitées.

La caractéristique essentielle des nouveaux fromages est que les protéines de lactosérum s'y trouvent en solution dans la phase aqueuse, la caséine seule étant coagulée, et que la proportion desdites protéines dans la phase aqueuse est supérieure à celle du lait de départ.

Si, ainsi qu'on le préfère, le fromage provient de lait de vache, sa teneur en protéines de lactosérum est supérieure à 20 % environ en poids par rapport aux protéines totales du fromage.

D'une façon encore plus préférée, la teneur en protéines de lactosérum du fromage est comprise entre environ 20 % et 45 % en poids par rapport aux protéines totales. On a constaté en effet, qu'au-delà de 45 %, la quantité de protéines de lactosérum devient trop élevée et ne permet pas d'obtenir des fromages ayant la consistance et les qualités organoleptiques désirées.

Dans la présente invention, les protéines de lactosérum ne sont pas altérées. En effet, lorsqu'on mélange le lait et le rétentat de la première étape d'ultrafiltration, on obtient un produit laitier dans lequel les protéines ne sont pas coagulées et où les protéines de lactosérum sont enfermées à leur état naturel dans le réseau de molécules de caséine. Ce genre de piégeage mécanique est favorisé par le fait que les micelles de caséine ont une structure poreuse capable de recueillir les protéines de lactosérum.

Dans le fromage final selon l'invention, la caséine est coagulée, mais les protéines de lactosérum se trouvent encore à l'état non dénaturé en solution dans la phase aqueuse.

Cette propriété originale peut être mise en évidence si l'on soumet le fromage à une ultracentrifugation poussée, auquel cas on peut séparer, d'une part la caséine coagulée et, d'autre part une phase aqueuse contenant les protéines de lactosérum.

L'invention permet de produire des fromages ayant de bonnes qualités organoleptiques et contenant des protéines de lactosérum en des proportions jamais atteintes jusqu'à présent, dans l'état des connaissances du demandeur.

Les équipements d'ultrafiltration mis en œuvre dans la présente invention sont du type connu de l'homme du métier et n'ont pas besoin d'être décrits plus en détails. Si nécessaire, on peut se référer aux documents de l'art antérieur cités au début de la présente description et relatifs à l'ultrafiltration du lactosérum, du lait et autres produits laitiers. Les membranes des modules d'ultrafiltration doivent être capables de retenir les protéines de lactosérum. On peut utiliser, pour la première étape d'ultrafiltration du lactosérum, un équipement différent de celui utilisé dans la seconde étape pour ultrafiltrer le mélange de lait et de concentré de protéines de lactosérum provenant de la première étape d'ultrafiltration. Il est également possible d'utiliser le même équipement pour réaliser successivement les deux étapes d'ultrafiltration.

Selon une caractéristique avantageuse de l'invention, on peut, en faisant varier la proportion de protéines de lactosérum mélangées au lait avant la deuxième étape d'ultrafiltration, obtenir finalement des fromages répondant à des besoins nutritionnels précis et ayant des teneurs variables en protéines de lactosérum par rapport aux protéines totales. On notera que la production de fromages réalisée selon la technique connue en ultrafiltrant directement le lait et en transformant le rétentat en fromage, conduit à un produit dans lequel la proportion de protéines de lactosérum par rapport aux protéines totales est fixée et correspond à celle du lait de départ.

On peut produire des fromages de tout type connu et ce, en utilisant une installation conventionnelle dans l'industrie fromagère. La production des fromages s'accompagne d'une synérèse.

En vue de coagulation du rétentat provenant de la seconde étape d'ultrafiltration, on peut utiliser n'importe lequel des moyens de coagulation connus dans l'industrie fromagère, tels que des enzymes,

4

dont la plus fréquemment utilisée est la présure, des acides alimentaires, tels que l'acide chlorhydrique, des ferments lactiques ou des combinaisons de ces moyens, par exemple une combinaison acide-présure.

Selon une variante, qui peut s'avérer avantageuse pour la fabrication de certains types de fromage tels que les fromages à pâte fraîche, le procédé de l'invention prévoit la coagulation du mélange de lait et de rétentat de lactosérum avant son ultrafiltration, celle-ci étant alors réalisée sur le coagulum. On obtient ainsi directement les fromages, surtout des fromages à pâte fraîche, possédant d'excellentes qualités organoleptiques et une pâte légère, dans lesquels la caséine est largement remplacée par les protéines de lactosérum.

Selon une variante avantageuse de l'invention, on peut utiliser l'acidité lactique présente dans le lactosérum soumis à la première ultrafiltration et qui se retrouve partiellement dans le rétentat de protéines de lactosérum mélangé au lait pour à la fois, ajuster à une valeur souhaitée le pH du mélange et réaliser ainsi de façon concomitante une solubilisation partielle dans ledit mélange des sels phosphocalciques, qui seront alors évacués dans le perméat obtenu lors de la seconde ultrafiltration, ce qui conduit alors à une déminéralisation partielle souhaitée du rétentat obtenu lors de cette deuxième ultrafiltration.

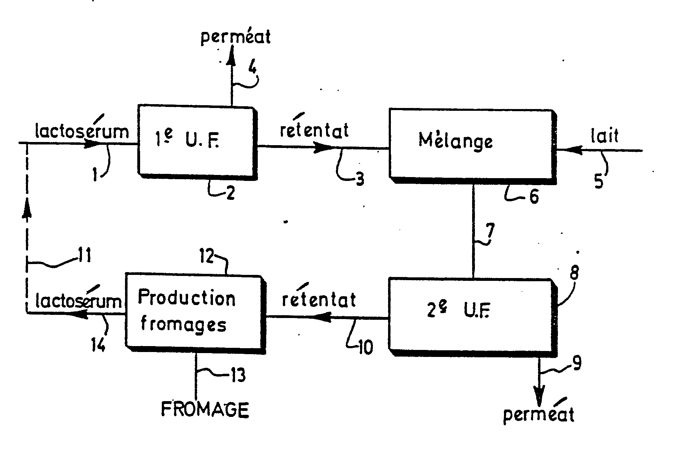

L'invention est encore illustrée par la description qui suit, faite en référence au dessin annexé qui est un schéma de principe du procédé.

Le lactosérum pasteurisé 1 est soumis à une première étape d'ultrafiltration (référence 2). On obtient ainsi un rétentat 3 contenant une proportion accrue de protéines du lactosérum et un perméat 4, qui est éliminé ou traité ultérieurement pour récupérer encore les produits qu'il contient, tels que le lactose. Le rétentat ou concentré (3) de protéines de lactosérum est mélangé dans une étape de mélange 6 avec du lait 5. Le mélange a lieu dans des proportions variables, par exemple à raison de 2 à 5 volumes de lait pour 1 volume de concentré. Le mélange 7 résultant est soumis à une étape d'ultrafiltration 8 dans laquelle on sépare un perméat 9 et un rétentat 10 dans lequel la teneur totale en protéines est supérieure à celle du mélange 7. Le rétentat 10 sert de matière première pour la production fromagère 12, qui est réalisée de manière conventionnelle. Selon qu'on part du lait 5 complet ou écrémé, il faut ajuster en 12 la teneur en matière grasse. C'est également à ce stade 12 qu'on effectue les additions et opérations habituelles selon le type de fromage particulier à produire. Après synérèse, le fromage en tant que produit final est obtenu en 13. Le lactosérum recueilli en 14 peut être recyclé par la ligne 11 pour rejoindre, après pasteurisation, le lactosérum 1 à traiter.

Il va sans dire que le schéma annexé est simplifié pour permettre une bonne compréhension du procédé de l'invention. Dans la pratique, les ultrafiltrations impliquent des recyclages pour permettre des passages renouvelés du produit à travers la membrane d'ultrafiltration et obtenir ainsi la concentration désirée en protéines dans le rétentat.

L'invention est illustrée par les exemples suivants.


Exemple 1


On a mélangé du lait écrémé (1.816 l) avec 908 l de caillé précédemment concentré 5 fois par ultrafiltration. (Le caillé provenait de la fabrication du jour précédent de fromage cheddar classique). On a concentré ensuite le mélange environ 3,7 fois par ultrafiltration. Par les techniques classiques en fromagerie pour le caillé brassé, on a alors fait cailler le mélange et le caillé a été découpé, essoré, salé et mis en moules pour l'obtention d'un fromage de lait écrémé se prêtant au traitement.

Les compositions des matières aux divers stades du procédé étaient les suivantes (en pourcentages)

| | Matières grasses (MG) | EST * | Protéines |
|---|---|---|---|
| Lait écrémé | 0,194 | 10,30 | 3,9 |
| Rétentat de lactosérum | 0,340 | 13,1 | 4,9 |
| Mélange avant ultrafiltration | 0,195 | 10,9 | 4,23 |
| Mélange après ultrafiltration | 0,740 | 23,5 | 15,6 |
| Lactosérum après découpage | — | — | 9,8 |
| Lactosérum exprimé | — | — | 9,3 |

* Extrait sec total.

Le fromage obtenu à partir de 180 l du mélange lait concentré/lactosérum pesait 4,84 kg et avait la composition suivante :

| | | |
|---|---|---|
| Humidité | 50,5 | % |
| Matière grasse | 2,1 | % |
| Protéines | 38,3 | % |
| Sel | 2,9 | % |
| pH | 5,25 | |

Les calculs suivants montrent les avantages offerts par la mise en œuvre de l'invention.

Avant ultrafiltration :
Volume total de lait écrémé + rétentat de lactosérum :                                    2 724 l
Teneur en protéines :                                                                      4,23 %


Après ultrafiltration (concentration 3,7 fois) :


Volume de rétentat = 2 724/3,7 =                                                           763 l
Teneur en protéines =                                                                     15,64 %

Ainsi, 180 l de rétentat contenaient approximativement 28,15 kg de protéines. Sur ce total, la perte était de 180 l de lactosérum moins 48,4 kg de fromage, soit 131,6 l contenant 9,8 % de protéines, c'est-à-dire 12,90 kg de protéines. Il subsistait donc dans le fromage 15,25 kg de protéines, ce qui donnait, avec l'humidité, le sel, les cendres et les corps gras, 48,4 kg de fromage.

Avec la quantité totale de lait écrémé (1.816 l) et de rétentat de lactosérum (908 l) mis en œuvre, le rendement calculé en fromage serait de 199,5 kg selon les données ci-dessus. A titre de comparaison, par mise en œuvre de 1.816 l de lait écrémé seulement, la quantité de fromage que l'on pourrait obtenir est estimée à 156,2 kg (à supposer un rendement de 8,6 % en fromage avec une teneur en humidité de 50 %).

Ainsi, le procédé selon l'invention assure un gain net d'approximativement 28,15 kg (199,5 — 156,2) de fromage par rapport au procédé classique.

On notera encore que le lactosérum séparé du fromage fabriqué par le procédé selon l'invention peut être recyclé pour mélange avec un lot ultérieur de lait écrémé. Ainsi, les 12,9 kg de protéines non retenues dans le fromage produit peuvent être au moins partiellement récupérées.

En outre, si par ultrafiltration, on concentre le mélange 4,5 fois au lieu de 3,7 fois, on peut obtenir une augmentation de rendement de 33 %.

## Exemple 2

Fabrication de fromages frais

Dans l'exemple 2, on a mis en œuvre une variante du procédé de l'invention, qui convient bien pour la production de fromage frais. Selon cette variante, le mélange de lait et de lactosérum est coagulé préalablement à la deuxième ultrafiltration (référence 8 sur la figure). Celle-ci était donc réalisée sur le coagulum et permettait d'obtenir directement un rétentat constituant le fromage final désiré. Dans les essais ci-après, le lactosérum a été ultrafiltré (référence 2 sur la figure) jusqu'à un facteur de 5. Le rétentat obtenu qui est concentré en protéines de lactosérum, est désigné ci-après par l'abréviation « rétentat × 5 de lactosérum ».

Deux essais de fabrication de fromages frais ont été effectués par ultrafiltration d'un mélange coagulé (lait écrémé et rétentat × 5 de lactosérum).

Essai n° 1 : 70 litres de rétentat × 5 de lactosérum, mélangé à 140 litres de lait écrémé : soit un rapport azote non caséique/matières azotées totales de 43,4 %.

Essai n° 2 : 40 litres de rétentat × 5 de lactosérum, mélangé à 180 litres de lait écrémé : soit un rapport azote non caséique/matières azotées totales de 31,6 %.

Le lait utilisé était du lait de grand mélange, écrémé, ayant subi une pasteurisation HTST (72 °C, 15 sec) à l'usine. Le lactosérum était issu de la fabrication d'emmental et subissait de même une pasteurisation HTST à l'usine.

L'ultrafiltration du lactosérum était effectuée à 50 °C en système discontinu sur un module ROMICON équipé de membrane PM50 développant une surface de 4,90 m². Le rétentat concentré 5 fois était mélangé au lait écrémé et subissait un deuxième traitement thermique (92 °C-15 sec).

Au mélange refroidi à 28 °C, il était ajouté 1 % de ferments lactiques mésophiles. Lorsque le pH atteignait la valeur de 6,30, on ajoutait 20 g de $CaCl_2$ et 1,5 ml de présure (force 1/10 000) pour 100 litres de mélange. La température atteignait 20 °C en 18 heures et le coagulum formé avait un pH de 4,50.

Après décaillage manuel, le coagulum était ultrafiltré sur un module équipé de membranes minérales développant au total une surface de 1,6 m². Le module était constitué de deux cartouches de 0,8 m², la première avec des membranes types 081 bis et la deuxième avec des membranes type 405. L'ultrafiltration était réalisée en système discontinu et poursuivie jusqu'au maximum de perte de charge (8 kg/cm²) supportable par les pompes de l'équipement (pompes positives). Le débit de recirculation était de 4 m³/heure soit une vitesse de balayage du produit sur la membrane de 1 m/sec. La température d'ultrafiltration était progressivement élevée de 20 °C à 40 °C. Des échantillons de rétentat étaient prélevés au cours de l'ultrafiltration lorsque le facteur de concentration était voisin de × 2,4 — 3 et à la concentration finale, puis étaient directement conditionnés en pot et conservés à 2 °C.

**0 080 933**

Le tableau I ci-après indique la composition chimique des produits mis en œuvre : le mélange lait écrémé/rétentat de lactosérum présente une teneur en matière sèche et matières azotées voisine de celle d'un lait écrémé avec cependant un rapport NCN/MAT plus élevé que celui du lait. Ce rapport diminue lorsque le mélange est chauffé à 92 °C, 15 sec : il passe de 43,4 % à 30,4 % pour l'essai n° 1 et de 31,6 % à 20,6 % pour l'essai n° 2. La teneur en calcium, voisine de 1 g/kg est plus faible que celle d'un lait.

La teneur en lactose après acidification du mélange est 20 % plus élevée que celle du caillé obtenu à partir de lait écrémé seul, après ultrafiltration directe du lait ou d'un coagulum de lait.

Le tableau II contient des indications relatives à la composition chimique des produits obtenus. Le facteur de concentration maximum atteint la valeur x4 lors de l'essai n° 1 soit un produit ayant une teneur en matière sèche de 20,2 % et une teneur en matières azotées de 13,7 %. Ce facteur de concentration x4 a pu être atteint en mettant hors-circuit l'échangeur, ce qui permet de diminuer la perte de charge dans le système d'ultrafiltration.

La composition chimique des perméats est indiquée au tableau III.

L'étude des variations de la viscosité des produits obtenus en fonction du gradient de vitesse à la température de 40 °C montre que les produits ont un comportement pseudo-plastique, non-newtonien puisque la viscosité diminue en fonction de l'élévation du gradient de vitesse. Ces produits enrichis en protéines solubles présentent une viscosité nettement plus faible que celle des produits obtenus à partir de lait seul. En effet, il faut atteindre une teneur en matières azotées totales de 11,5 % avec NCN/MAT = 0,43 (cas de l'essai n° 1) pour obtenir une viscosité voisine des rétentats de lait écrémé (seul) ayant une teneur en MAT de 8,6 % avec NCN/MAT = 0,23.

Le phénomène semble moins marqué lorsque le rapport NCN/MAT est de 31,6 % (cas de l'essai n° 2) : en effet, le produit ayant une teneur en MAT de 11,3 % présente une viscosité seulement 20 % inférieure à celle d'un produit obtenu à partir d'un coagulum de lait écrémé ayant une teneur en MAT de 11,5 %.

Les fromages obtenus ont été très appréciés par un groupe de dégustateurs, qui ont conclu à leurs très bonnes qualités organoleptiques. Ils se distinguent des fromages frais traditionnels par la légèreté de la pâte.

Cet exemple montre que le procédé de l'invention permet d'obtenir des fromages frais doués de bonnes qualités organoleptiques tout en substituant à la caséine, les protéines de lactosérum (ou protéines solubles), lesquelles ne sont actuellement pas — ou que peu — valorisées.

(voir tableau I page 8)

7

Tableau I
Composition chimique des produits mis en œuvre (résultats exprimés en g/kg)

| | Essai N° | (1) EST | (2) MAT | (3) NCN | NCN/MAT | (4) NPN | Cendres | Ca Total | Lactose | pH |
|---|---|---|---|---|---|---|---|---|---|---|
| Lait écrémé | 1 | 88,75 | 35,53 | 7,69 | 0,23 | 1,46 | 7,5 | 1,25 | 47,5 | 6,59 |
| | 2 | 87,9 | 31,20 | 7,43 | 0,24 | 1,46 | 7,43 | 1,21 | 43,8 | 6,66 |
| Lactosérum | 1 | 57,4 | 8,55 | 7,70 | 0,90 | 1,75 | 4,77 | 0,35 | 44,1 | 6,63 |
| | 2 | 57,3 | 8,42 | 7,74 | 0,92 | 1,89 | 4,75 | 0,33 | 44,0 | 6,45 |
| Rétentat × 5 Lactosérum | 1 | 84,87 | 37,55 | 28,03 | 0,75 | | 5,71 | 0,59 | 41,7 | 6,90 |
| | 2 | 88,3 | 35,06 | 28,55 | 0,81 | | 5,58 | 0,48 | | 6,96 |
| Mélange | 1 | 85,0 | 32,5 | 14,10 | 0,434 | | 6,73 | 1,01 | | 6,70 |
| | 2 | 87,8 | 33,2 | 10,52 | 0,316 | | 7,09 | 1,07 | | 6,71 |
| Mélange 92 °C 15″ | 1 | | 31,34 | 9,54 | 0,304 | 2,13 | | | 46,9 | 6,63 |
| | 2 | | 34,53 | 7,12 | 0,206 | 1,76 | | | 43,8 | 6,60 |
| Caillé | 1 | | | | | | | | 41,0 | 4,38 |
| Caillé | 2 | | | | | | | | 37,3 | 4,34 |
| Caillé (5) comparaison | | 89,6 | 34,4 | 4,83 | 0,140 | | | | | |

(1) EST = extrait sec total.
(2) MAT = matières azotées totales.
(3) NCN = matière azotée non caséique.
(4) NPN = matière azotée non protéique.
(5) Le caillé « comparaison » a été obtenu après ultrafiltration directe du lait et transformation du rétentat en fromage frais selon la technique connue.

Tableau II
Composition chimique des produits obtenus (résultats exprimés en g/kg)

| | Essai N° | EST | MAT | Cendres | Ca | Lactose | pH |
|---|---|---|---|---|---|---|---|
| Rétentat × 2,4 | 1 | 155,5 | 84,34 | 6,60 | 1,15 | 36,6 | 4,46 |
| | 2 | 134,3 | 80,96 | 7,20 | 0,95 | 35,9 | 4,38 |
| Rétentat × 3 | 1 | 168,7 | 114,7 | 6,72 | 1,14 | 37,5 | 4,51 |
| Rétentat final | 1 | 202,0 | 136,6 | 6,94 | 1,08 | 39,2 | 4,53 |
| | 2 | 168,9 | 113,36 | 7,30 | 0,75 | 36,7 | 4,41 |

**0 080 933**

Tableau III

Composition chimique des perméats (résultats exprimés en g/kg)

|  | Essai N° | EST | MAT | NPN | α-lactalbumine | β-lactoglobuline |
|---|---|---|---|---|---|---|
| Perméat moyen lactosérum | 1 | 49,4 | 3,14 | 2,51 | 0,380 | 0,250 |
|  | 2 | 50,5 | 2,26 | 1,46 |  |  |
| Perméat moyen 081 bis | 1 | 45,7 | 2,58 | 2,16 | 0,080 | 0,140 |
|  | 2 | 52,5 | 3,78 | 2,48 |  |  |
| Perméat moyen 405 | 1 | 50,75 | 3,24 | 2,54 | 0,170 | 0,245 |
|  | 2 | 56 | 5,26 | 2,92 |  |  |

Exemple 3

Fabrication de fromages à pâte « demi-dure ».

(1) matériel d'ultrafiltration

L'ultrafiltration du lactosérum et du lait était effectuée successivement sur le même module (appareillage SFEC) comprenant deux étages :
— un premier étage composé de deux cartouches de membranes minérales S 150 (surface totale 7 m²),
— un second étage composé de deux cartouches de membranes minérales S 37 (surface totale 1,8 m²).
L'ultrafiltration était réalisée en discontinu avec recirculation des rétentats jusqu'à obtention de la concentration recherchée.

(2) Préparation du rétentat lactosérum

On a utilisé un lactosérum de fromagerie emmental chauffé à 80 °C pendant 15 secondes, après avoir été conservé une nuit à 2 °C. Le volume mis en œuvre était de 1 050 litres.
Ultrafiltration :
— remplissage de la cuve (400 l) — réchauffage à 50 °C.
— mise en route de l'ultrafiltration dans les conditions hydrodynamiques suivantes :

$1^{er}$ étage : $\Delta P = 4,8 - 2,9$ bars
$2^e$ étage : $\Delta P = 4,0 - 2,7$ bars

le reste du lactosérum était ajouté par petites fractions dans la cuve de l'appareillage d'ultrafiltration pour compenser le volume de perméat extrait.
— la température du lactosérum en cours d'ultrafiltration a varié entre 55 °C et 46 °C.
— performances : 846 l de perméat (perméat 1) ont été extraits en 1 h 05 minutes.
— pH du rétentat de lactosérum : 5,50.

(3) Préparation du préformage (mélange de lait et de rétentat lactosérum)

Le lait mis en œuvre était un lait de fromagerie emmental chauffé à 80 °C pendant 15 secondes, enrichi en matière grasse par addition de crème pasteurisée. Son volume était de 435 litres.
Le lait était ajouté au rétentat de lactosérum dans la cuve de l'appareillage d'ultrafiltration : celle-ci était poursuivie pendant l'addition du lait. L'addition de lait était effectuée de la façon suivante : 200 litres environ dès que la concentration désirée du lactosérum était obtenue, puis le reste par petites fractions en compensation du volume de perméat extrait.
Déroulement de l'ultrafiltration (y compris celle du lactosérum)

to    démarrage ultrafiltration lactosérum
to + 1h05   fin ultrafiltration lactosérum
            addition du lait
to + 1h37   fin addition du lait
to + 1h47   addition de 2 litres de levains thermophiles
            pH du rétentat avant addition : 6,55

9

pH du rétentat après addition : 6,48

to + 2h01 volume du perméat (perméat 2) récupéré entre to + 1h05 et to 2h01 : 450 litres
addition de 205 litres d'eau à 55 °C.

to + 2h42 prélèvement de rétentat fc5 : 6 litres

to + 3h08 : Dijonction pompe circulation - pH
rétentat = 6,47
perméat retiré : 310 l (perméat 3)
Le rétentat est maintenu en circulation à l'aide de la pompe d'alimentation.

to + 3h10 : addition de :

— 1 litre levains thermophiles
— 0,9 l de levains mésophiles
— 100 ml suspension bactéries propioniques
— 90 ml d'une solution (0,9 g de poudre) d'enzyme protéolytique

to + 3h20 Arrêt.

Résultats

Les résultats des analyses sont consignés dans le tableau IV ci-après.

|  | EST g/kg | MAT g/kg | MG[1] g/kg | Lactose g/kg | MG/EST |
|---|---|---|---|---|---|
| Lactosérum | 58,6 | 8,54 | — | 62,2 | |
| Rétentat lactosérum | 85,0 | 29,3 | 1,5 | 43,7 | |
| Perméat 1 | 51,6 | 2,77 | — | 42,4 | |
| Lait | 125,4 | 31,7 | 41,5 | 44,4 | |
| Rétentat à to + 2h01 | 250 | 103 | 98,5 | 34,4 | |
| Perméat 2 | 55,7 | 2,79 | — | 46,3 | |
| Rétentat final | 450 | 204 | 210 | 10,4 | 0,466 |
| Perméat 3 | 28,8 | 3,92 | — | 20,9 | |

(1) MG = matière grasse.

Transformation en fromage

Le préfromage préparé en (3) a été transformé en fromages à pâte demi-dure dans les conditions ci-après (le temps to étant celui du début de l'essai rapporté en (3) précédemment).

to + 3h30 emprésurage et moulage en continu
température du préfromage avant emprésurage : 52-53 °C
température du préfromage après emprésurage : 33-35 °C
pH du préfromage 6,45
quantité de présure 1/10 000 utilisée 25 ml/100 kg préfromage liquide
durée de gélification environ : 15 mn

to + 4h30 démoulage → égouttage (fromage non découpé)
ou démoulage — découpage → égouttage (fromage découpé)
découpage du coagulum en cubes de 2 × 2 × 2 cm

to + 5h30 pH du coagulum 6,21

to + 7h30 retournement des fromages pH 5,50

Jour J + 1
démoulage pH 5,40
saumurage pendant 6h30

# 0 080 933

Tableau V
Résultats

| | grammes par kilo produit | | | | | |
| | E.S.T. | M.G. | E.S.D.* | M.A.T. | Lactose | MG/ES |
|---|---|---|---|---|---|---|
| Fromage non découpé J + 2 | 475,4 | 224,1 | 251,3 | 208,2 | 2,2 | 0,47 |
| Fromage découpé J + 2 | 491,4 | 221,8 | 269,6 | 203,7 | 2,5 | 0,45 |
| Lactosérum égouttage du fromage découpé | 165,6 | 10,0 | 155,6 | 123,1 | | |

* ESD = retrait sec dégraissé.

Les fromages obtenus possédaient d'excellentes qualités organoleptiques.

Exemple 4

Fabrication de fromages à pâte « demi-dure »

On a répété l'exemple 3 dans des conditions légèrement différentes, en utilisant le même matériel d'ultrafiltration avec les mêmes matières premières : lactosérum et lait gras.

(1) Préparation du rétentat de lactosérum

Le lactosérum de fromagerie emmental chauffé à 80 °C pendant 15 secondes a été traité dès son arrivée à l'installation.
Le volume mis en œuvre était de : 1.050 litres.

Ultrafiltration

— remplissage de la cuve (400 l) — réchauffage à 50 °C,
— mise en route de l'ultrafiltration dans les conditions hydrodynamiques suivantes :

1$^{er}$ étage : $\Delta P = 4,8 - 2,9$ bars
2$^e$ étage : $\Delta P = 4,0 - 2,7$ bars.

— le reste du lactosérum était ajouté par petites fractions dans la cuve de l'appareillage d'ultrafiltration pour compenser le volume du perméat retiré.
— la température du lactosérum au cours de l'ultrafiltration a varié entre 55 °C et 48 °C.
— performances : 855 litres de perméat (perméat 1) ont été retirés en 1 h 17 minutes.
— pH du rétentat de lactosérum : 5,40

(2) Préparation du préfromage (mélange de lait et de rétentat lactosérum)

Le lait mis en œuvre était un lait de fromagerie emmental chauffé à 80 °C pendant 15 secondes, enrichi en matière grasse par addition de crème pasteurisée. Son volume était de 465 litres.
Le lait était ajouté au rétentat de lactosérum dans la cuve de l'appareillage d'ultrafiltration : celle-ci était poursuivie pendant l'addition du lait. L'addition de lait était effectuée de la façon suivante : 200 litres environ dès que la concentration désirée du lactosérum était obtenue puis le reste par petites fractions en compensation du perméat retiré.
Déroulement de l'ultrafiltration (y compris celle du lactosérum).

to   démarrage ultrafiltration lactosérum
to + 1h17   fin ultrafiltration lactosérum
         addition du lait
to + 1h57   fin addition du lait
to + 2h02   addition de 2 litres de levains thermophiles
to + 2h17   volume du perméat retiré (perméat 2) 454 l.
         Rétentat pH : 6,40
         Addition de 210 litres d'eau.
to + 3h42   Addition de :

11

— 90 ml de solution d'enzyme protéolytique (0,9 g poudre)
— 0,9 l de levains thermophiles
— 100 ml suspension de bactéries propioniques
to + 3h52 température 55 °C
Arrêt — rétentat pH = 6,33
perméat retiré (perméat 3) : 350 litres.

Résultats

Les résultats des analyses sont consignés dans le tableau VI ci-après.

Tableau VI

| | EST g/kg | MAT g/kg | MG g/kg | Lactose g/kg | MG/EST |
|---|---|---|---|---|---|
| Lactosérum | 60,9 | 8,2 | — | 44,0 | |
| Rétentat lactosérum | 85,6 | 27,2 | 1 | 42,1 | |
| Perméat 1 | 52,4 | 2,50 | — | 44,2 | |
| Lait | 120,8 | 30,2 | 36 | 44,9 | |
| Rétentat à 2h17 | 203 | 75,7 | 70 | 39,5 | |
| Perméat 2 | 55,1 | 2,32 | — | 45,9 | |
| Rétentat final | 462 | 225 | 208 | 12,3 | 0,45 |
| Perméat 3 | 32,8 | 2,95 | — | 26,3 | |

(3) Transformation en fromage

Le préfromage préparé en (2) a été transformé en fromages à pâte demi-dure dans les conditions ci-après (le temps to étant celui de l'essai rapporté en (2) précédemment)

to + 4h15 emprésurage et moulage en continu
température de préfromage avant emprésurage : 54-55 °C
température du préfromage après emprésurage : 38-39 °C
pH de préfromage : 6,30
quantité présure 1/10 000 utilisée 25 ml/100 kg préfromage liquide
durée de gélification environ : 10 mn
to + 6h15 démoulage → égouttage pH : 5,30 (fromage non découpé)
ou démoulage — découpage du coagulum en cubes de 2 × 2× 2 cm ou 1 × 1 × 1 cm
saumurage du coagulum découpé,
remoulage → égouttage (fromage découpé)
to + 7h00 retournement pH : 5,25
Jour J + 1 démoulage pH : 5,05
saumurage pendant 6 h 30 des fromages non découpés pH : 5,20

Tableau VII
Résultats

| | E.S.T. | M.G. | E.S.D. | M.A.T. | Lactose | MG/EST |
|---|---|---|---|---|---|---|
| | | grammes par kilo produit | | | | |
| Fromage non découpé J + 5 | 495,6 | 218,7 | 276,9 | 226,0 | 0,8 | 0,44 |
| Fromage découpé 2 × 2 × 2 J + 5 | 503,4 | 223,5 | 279,9 | 219,2 | — | 0,44 |
| Fromage découpé 1 × 1 × 1 J + 5 | 514,5 | 237,9 | 276,6 | 226,0 | — | 0,46 |
| Lactosérum égouttage du fromage découpé 2 × 2 × 2 | 177,9 | 4,0 | 173,9 | 83,8 | | |
| Lactosérum égouttage du fromage découpé 1 × 1 × 1 | 183,3 | 2,0 | 181,3 | 95,6 | | |

Les fromages à pâte demi-dure obtenus possédaient d'excellentes qualités organoleptiques.

Les résultats avantageux obtenus par le procédé de l'invention sont très surprenants car, dans l'état des connaissances de l'homme du métier, il était considéré comme impossible d'augmenter la teneur en protéines de lactosérum des fromages sans nuire aux qualités organoleptiques de ceux-ci.

L'invention permet d'obtenir un tel résultat et ce, grâce à un procédé simple, facile à mettre en œuvre avec des équipements conventionnels en fromagerie et réalisant des rendements nettement améliorés dans la production fromagère.

**Revendications** (pour les Etats contractants : BE, CH, DE, FR, GB, IT, U, LU, NL, SE)

1. Procédé de récupération des protéines de lactosérum, dans lequel on soumet le lactosérum, séparé du caillé de fromage au cours du traitement normal, d'abord à une pasteurisation, puis à une ultrafiltration pour obtenir un concentré de protéines de lactosérum, ledit procédé étant caractérisé en ce qu'on mélange le concentré avec du lait et qu'on soumet le lait ainsi enrichi à une autre ultrafiltration après laquelle on le traite de la manière usuelle pour former un caillé.

2. Procédé selon la revendication 1, caractérisé en ce que l'on effectue les opérations d'ultrafiltration de façon à obtenir un rapport de concentration d'au moins 3,5.

3. Procédé selon la revendication 2, caractérisé en ce que le rapport de concentration est compris entre 5 et 6.

4. Procédé selon l'une quelconque des revendications 1 à 3, caractérisé en ce que le volume de lait mélangé avec le concentré de protéines de lactosérum est au moins double du volume de concentré.

5. Procédé selon la revendication 4, caractérisé en ce que le volume de lait est de 2 à 5 fois le volume du concentré.

6. Procédé selon l'une quelconque des revendications 1 à 5, caractérisé en ce que le lait est du lait entier, du lait écrémé ou un mélange de l'un et l'autre.

7. Procédé de fabrication de fromage, caractérisé en ce qu'il comporte la fermentation du caillé enrichi produit suivant le procédé selon l'une quelconque des revendications 1 à 6.

8. Procédé de fabrication de fromage selon la revendication 7, caractérisé en ce qu'il comporte l'opération de mélange de caillé de fromage ordinaire avec le caillé enrichi produit suivant le procédé selon l'une quelconque des revendications 1 à 6 et la fermentation du mélange de caillés.

9. Procédé selon la revendication 8, caractérisé en ce que le rapport caillé enrichi/caillé ordinaire est d'environ 1 : 4.

10. Procédé selon la revendication 7, caractérisé en ce qu'il est modifié de façon à inclure les étapes (a) coagulation du mélange de lait et de concentré de protéines de lactosérum et (b) l'ultrafiltration du coagulum, auquel cas on obtient directement le fromage désiré après ladite ultrafiltration.

11. Fromages dans lesquels les protéines de lactosérum se trouvent en solution dans la phase aqueuse, la caséine seule étant coagulée, et la proportion desdites protéines de lactosérum dans la phase aqueuse est supérieure à celle du lait de départ.

12. Fromages selon la revendication 11 dans lesquels la teneur en protéines de lactosérum est supérieure à 20 % en poids environ par rapport aux protéines totales.

13. Fromages selon la revendication 12, dans lesquels la teneur en protéines de lactosérum est comprise entre environ 20 % et 45 % en poids par rapport aux protéines totales.

**Revendications** (pour l'Etat contractant AT)

1. Procédé de récupération des protéines de lactosérum, dans lequel on soumet le lactosérum, séparé du caillé de fromage au cours du traitement normal, d'abord à une pasteurisation, puis à une ultrafiltration pour obtenir un concentré de protéines de lactosérum, ledit procédé étant caractérisé en ce qu'on mélange le concentré avec du lait et qu'on soumet le lait ainsi enrichi à une autre ultrafiltration après laquelle on le traite de la manière usuelle pour former un caillé.

2. Procédé selon la revendication 1, caractérisé en ce que l'on effectue les opérations d'ultrafiltration de façon à obtenir un rapport de concentration d'au moins 3,5.

3. Procédé selon la revendication 2, caractérisé en ce que le rapport de concentration est compris entre 5 et 6.

4. Procédé selon l'une quelconque des revendications 1 à 3, caractérisé en ce que le volume de lait mélangé avec le concentré de protéines de lactosérum est au moins double du volume de concentré.

5. Procédé selon la revendication 4, caractérisé en ce que le volume de lait est de 2 à 5 fois le volume du concentré.

6. Procédé selon l'une quelconque des revendications 1 à 5, caractérisé en ce que le lait est du lait entier, du lait écrémé ou un mélange de l'un et l'autre.

7. Procédé de fabrication de fromage, caractérisé en ce qu'il comporte la fermentation du caillé enrichi produit suivant le procédé selon l'une quelconque des revendications 1 à 6.

8. Procédé de fabrication de fromage selon la revendication 7, caractérisé en ce qu'il comporte

l'opération de mélange de caillé de fromage ordinaire avec le caillé enrichi produit suivant le procédé selon l'une quelconque des revendications 1 à 6 et la fermentation du mélange de caillés.

9. Procédé selon la revendication 8, caractérisé en ce que le rapport caillé enrichi/caillé ordinaire est d'environ 1 : 4.

10. Procédé selon la revendication 7, caractérisé en ce qu'il est modifié de façon à inclure les étapes (a) coagulation du mélange de lait et de concentré de protéines de lactosérum et (b) l'ultrafiltration du coagulum, auquel cas on obtient directement le fromage désiré après ladite ultrafiltration.

11. Procédé selon l'une quelconque des revendications 1 à 10, caractérisé en ce qu'on prépare des fromages dans lesquels les protéines de lactosérum se trouvent en solution dans la phase aqueuse, la caséine seule étant coagulée, et la proportion desdites protéines de lactosérum dans la phase aqueuse est supérieure à celle du lait de départ.

12. Procédé selon la revendication 11, caractérisé en ce que la teneur en protéines de lactosérum est supérieure à 20 % en poids environ par rapport aux protéines totales.

13. Procédé selon la revendication 12, caractérisé en ce que la teneur en protéines de lactosérum est comprise entre environ 20 % et 45 % en poids par rapport aux protéines totales.


**Claims** (for the Contracting States : BE, CH, DE, FR, GB, IT, LI, LU, NL, SE)

1. Process of recovering whey proteins, wherein whey separated from cheese curd during normal processing is first pasteurized and then subjected to ultrafiltration to provide a whey protein concentrate, said process being characterized in that the concentrate is mixed with milk and that the thus enriched .milk is subjected to further ultrafiltration after which .it is treated in the usual manner to form a curd.

2. Process according to Claim 1, characterized in that the ultrafiltration steps are carried out so as to provide a concentration ratio of at least 3.5.

3. Process according to Claim 2, characterized in that the concentration ratio ranges from 5 to 6.

4. Process according to any one of Claims 1 to 3, characterized in that the volume of milk mixed with the whey protein concentrate is at least twice the volume of concentrate.

5. Process according to Claim 4, characterized in that the volume of milk is from 2 to 5 times the volume of the concentrate.

6. Process according to any one of claims 1 to 5, characterized in that the milk is whole milk, skim milk or a mixture of the two.

7. Cheese-making process, characterized in that it comprises fermentation of the enriched curd product of the process according to any one of claims 1 to 6.

8. Cheese-making process according to Claim 7, characterized in that it includes the step of mixing ordinary cheese curd with the enriched curd product of the process according to any one of Claims 1 to 6 and fermenting the curd mixture.

9. Process according to Claim 8, characterized in that the ratio of enriched curd to ordinary curd is about 1 : 4.

10. Process according to Claim 7, characterized in that it is modified as to comprise the steps of (a) curdling of the mixture of milk and whey protein concentrate and (b) ultrafiltration of the coagulum, in which case the desired cheese is directly obtained after said ultrafiltration.

11. Cheeses wherein the whey proteins are in solution in the aqueous phase, only the casein being curdled, and the proportion of said whey proteins in the aqueous phase is higher than that in the starting milk.

12. Cheeses according to Claim 11, wherein the whey protein content is higher than about 20 % by weight as related to the total proteins.

13. Cheeses according to Claim 12, wherein the whey protein content ranges from about 20 % to about 45 % by weight as related to the total proteins.


**Claims** (for the Contracting State AT)

1. Process of recovering whey proteins, wherein whey separated from cheese curd during normal processing is first pasteurized and then subjected to ultrafiltration to provide a whey protein concentrate, said process being characterized in that the concentrate is mixed with milk and that the thus enriched milk is subjected to further ultrafiltration after which it is treated in the usual manner to form a curd.

2. Process according to Claim 1, characterized in that the ultrafiltration steps are carried out as to provide a concentration ratio of at least 3.5.

3. Process according to Claim 2, characterized in that the concentration ratio ranges from 5 to 6.

4. Process according to any one of Claims 1 to 3, characterized in that the volume of milk mixed with the whey protein concentrate is at least twice the volume of concentrate.

5. Process according to Claim 4, characterized in that the volume of milk is from 2 to 5 times the volume of the concentrate.

6. Process according to any one of claims 1 to 5, characterized in that the milk is whole milk, skim milk or a mixture of the two.

7. Cheese-making process, characterized in that it comprises fermentation of the enriched curd product of the process according to any one of claims 1 to 6.

8. Cheese-making process according to Claim 7, characterized in that it includes the step of mixing ordinary cheese curd with the enriched curd product of the process according to any one of Claims 1 to 6 and fermenting the curd mixture.

9. Process according to Claim 8, characterized in that the ratio of enriched curd to ordinary curd is about 1 : 4.

10. Process according to Claim 7, characterized in that it is modified as to comprise the steps of (a) curdling of the mixture of milk and whey protein concentrate and (b) ultrafiltration of the coagulum, in which case the desired cheese is directly obtained after said ultrafiltration.

11. Process according to any one of claims 1 to 10, characterized in that cheeses are produced, wherein the whey proteins are in solution in the aqueous phase, only the casein being curdled, and the proportion of said whey proteins in the aqueous phase is higher than that in the starting milk.

12. Process according to Claim 11, characterized in that the whey protein content is higher than about 20 % by weight as related to the total proteins.

13. Process according to Claim 12, characterized in that the whey protein content ranges from about 20 % to about 45 % by weight as related to the total proteins.

**Patentansprüche** (für die Vertragsstaaten : BE, CH, DE, FR, GB, IT, LI, LU, NL, SE)

1. Verfahren zur Rückgewinnung von Molkeproteinen, in dem man die vom Käsebruch im Verlauf der normalen .Behandlung abgetrennte Molke zuerst einer Pasteurisierung und dann einer Ultrafiltration unterwirft, wobei man ein Konzentrat von Molkeproteinen erhält, dadurch gekennzeichnet, daß man das Konzentrat mit Milch mischt, und daß man die so angereicherte Milch einer weiteren Ultrafiltration. unterwirft, nach der man sie in üblicher Weise behandelt, um einen Käsebruch zu bilden.

2. Verfahren nach Anspruch 1, dadurch gekennzeichnet, daß man die Arbeitsgänge der Ultrafiltration in einer solchen Weise durchführt, daß man ein Konzentrationsverhältnis von wenigstens 3,5 erhält.

3. Verfahren nach Anspruch 2, dadurch gekennzeichnet, daß das Konzentrationsverhältnis zwischen 5 und 6 liegt.

4. Verfahren nach irgendeinem der Ansprüche 1 bis 3, dadurch gekennzeichnet, daß das Volumen der mit dem Konzentrat von Molkeproteinen gemischten Milch wenigstens das Doppelte des Konzentratvolumens beträgt.

5. Verfahren nach Anspruch 4, dadurch gekennzeichnet, daß das Volumen der Milch das zwei- bis fünffache des Konzentratvolumens beträgt.

6. Verfahren nach irgendeinem der Ansprüche 1 bis 5, dadurch gekennzeichnet, daß die Milch Vollmilch, entrahmte Milch oder ein Gemisch der einen und der anderen ist.

7. Verfahren zur Herstellung von Käse, dadurch gekennzeichnet, daß es die Gärung des nach dem Verfahren gemäß irgendeinem der Ansprüche 1 bis 6 hergestellten angereicherten geronnenen Produkts umfaßt.

8. Verfahren zur Herstellung von Käse nach Anspruch 7, dadurch gekennzeichnet, daß es den Arbeitsgang der Mischung des gewöhnlichen Käsebruchs mit dem angereicherten Produkt, das nach dem Verfahren gemäß irgendeinem der Ansprüche 1 bis 6 hergestellt worden ist, und die Gärung des Gemisches von geronnenen Produkten umfaßt.

9. Verfahren nach Anspruch 8, dadurch gekennzeichnet, daß das Verhältnis von angereichertem Produkt/gewöhnlichem Käsebruch etwa 1 : 4 beträgt.

10. Verfahren nach Anspruch 7, dadurch gekennzeichnet, daß es in einer solchen Weise modifiziert ist, daß es die Stufen (a) Koagulierung des Gemisches von Milch und Konzentrat von Molkeproteinen und (b) die Ultrafiltration des Koagulats einschließt, in welchem Fall man direkt den gewünschten Käse nach der genannten Ultrafiltration erhält.

11. Käsen, in denen die Molkeproteine sich in Lösung in der wässrigen Phase befinden, wobei das Casein allein koaguliert ist, und der Anteil der genannten Molkeproteine in der wässrigen Phase höher ist als derjenige der Ausgangsmilch.

12. Käsen nach Anspruch 11, in denen der Gehalt an Molkeproteinen höher ist als etwa 20 Gew.-% bezogen auf die Gesamtproteine.

13. Käsen nach Anspruch 12, in denen der Gehalt an Molkeproteinen zwischen etwa 20 und 45 Gew.-%, bezogen auf die Gesamtproteine, liegt.

**Patentansprüche** (für den Vertragsstaat AT)

1. Verfahren zur Rückgewinnung von Molkeproteinen, in dem man die vom Käsebruch im Verlauf der normalen Behandlung abgetrennte Molke zuerst einer Pasteurisierung und dann einer Ultrafiltration unterwirft, wobei man ein Konzentrat von Molkeproteinen erhält, dadurch gekennzeichnet, daß man das Konzentrat mit Milch mischt, und daß man die so angereicherte Milch einer weiteren Ultrafiltration unterwirft, nach der man sie in üblicher Weise behandelt, um einen Käsebruch zu bilden.

2. Verfahren nach Anspruch 1, dadurch gekennzeichnet, daß man die Arbeitsgänge der Ultrafiltration in einer solchen Weise durchführt, daß man ein Konzentrationsverhältnis von wenigstens 3,5 erhält.

3. Verfahren nach Anspruch 2, dadurch gekennzeichnet, daß das Konzentrationsverhältnis zwischen 5 und 6 liegt.

4. Verfahren nach irgendeinem der Ansprüche 1 bis 3, dadurch gekennzeichnet, daß das Volumen der mit dem Konzentrat von Molkeproteinen gemischten Milch wenigstens das Doppelte des Konzentratvolumens beträgt.

5. Verfahren nach Anspruch 4, dadurch gekennzeichnet, daß das Volumen der Milch das zwei- bis fünffache des Konzentratvolumens beträgt.

6. Verfahren nach irgendeinem der Ansprüche 1 bis 5, dadurch gekennzeichnet, daß die Milch Vollmilch, entrahmte Milch oder ein Gemisch der einen und der anderen ist.

7. Verfahren zur Herstellung von Käse, dadurch gekennzeichnet, daß es die Gärung des nach dem Verfahren gemäß irgendeinem der Ansprüche 1 bis 6 hergestellten angereicherten geronnenen Produkts umfaßt.

8. Verfahren zur Herstellung von Käse nach Anspruch 7, dadurch gekennzeichnet, daß es den Arbeitsgang der Mischung des gewöhnlichen Käsebruchs mit dem angereicherten Produkt, das nach dem Verfahren gemäß irgendeinem der Ansprüche 1 bis 6 hergestellt worden ist, und die Gärung des Gemisches von geronnenen Produkten umfaßt.

9. Verfahren nach Anspruch 8, dadurch gekennzeichnet, daß das Verhältnis von angereichertem Produkt/gewöhnlichem Käsebruch etwa 1 : 4 beträgt.

10. Verfahren nach Anspruch 7, dadurch gekennzeichnet, daß es in einer solchen Weise modifiziert ist, daß es die Stufen (a) Koagulierung des Gemisches von Milch und Konzentrat von Molkeproteinen und (b) die Ultrafiltration des Koagulats einschließt, in welchem Fall man direkt den gewünschten Käse nach der genannten Ultrafiltration erhält.

11. Verfahren nach irgendeinem der Ansprüche 1 bis 10, dadurch gekennzeichnet, daß man Käsen herstellt, in denen die Molkeproteine sich in Lösung in der wäßrigen Phase befinden, wobei das Kasein allein koaguliert ist, und der Anteil der genannten Molkeproteine in der wäßrigen Phase höher ist als derjenige der Ausgangsmilch.

12. Verfahren nach Anspruch 11, dadurch gekennzeichnet, daß der Gehalt an Molkeproteinen höher ist als etwa 20 Gew.-%, bezogen auf die Gesamtproteine.

13. Verfahren nach Anspruch 12, dadurch gekennzeichnet, daß der Gehalt an Molkeproteinen zwischen etwa 20 und 45 Gew.-%, bezogen auf die Gesamtproteine, liegt.